# EUROPÄISCHE PATENTSCHRIFT

(11) **EP 1 307 676 B1**
(45) Veröffentlichungstag und Bekanntmachung des Hinweises auf die Patenterteilung: **03.11.2004**
(21) Anmeldenummer: 01955375.9
(22) Anmeldetag: 26.07.2001
(51) Int. Cl.: F16K 31/08, F16K 27/04

(54) **BISTABILES MAGNETVENTIL**
BISTABLE SOLENOID VALVE
ELECTROVANNE BISTABLE

(30) Priorität: 31.07.2000 DE 10037251
(43) Veröffentlichungstag der Anmeldung: 07.05.2003
(73) Patentinhaber: BSH Bosch und Siemens Hausgeräte GmbH, 81739 München (DE)
(72) Erfinder: KORDON, Rolf, 89537 Giengen (DE)
(86) Internationale Anmeldenummer: PCT/EP2001/008680
(87) Internationale Veröffentlichungsnummer: WO 2002/010628

(56) Entgegenhaltungen:
- EP-A- 0 333 452
- EP-A- 0 339 339
- EP-A- 0 711 944
- WO-A-92/07210
- DE-A- 3 718 490
- US-A- 3 977 436
- US-A- 4 534 539

## Beschreibung

Die vorliegende Erfindung betrifft ein Magnetventil, welches einen Ventilkörper mit einem Eingang und zwei Ausgängen und einem in dem Ventilkörper zwischen zwei jeweils unterschiedlichen Schaltstellungen des Magnetventils entsprechenden Endpositionen bewegbaren Ventilglied, wenigstens einem Permanentmagneten zum Halten des Ventilglieds in der jeweils eingenommenen Endposition und eine Magnetspule zum Ausüben einer eine Verlagerung in die jeweils andere Endposition bewirkenden Magnetkraft auf das Ventilglied aufweist.

Ein solches bistabiles Magnetventil ist beispielsweise aus der U.S. 3,977,436 bekannt und kommt insbesondere in Kältegeräten zum Einsatz, bei denen zwei oder mehrere Kammern wie etwa Kühl- und Frostfach eines Kühl-Gefrier-Kombinationsgeräts, mit Hilfe von aus einer einzelnen Quelle stammendem Kältemittel auf unterschiedliche Betriebstemperaturen gekühlt werden sollen. Es wird bei einem solchen Gerät angewendet, um Kühlkreise der einzelnen Kammern bedarfsweise gezielt mit Kältemittel zu versorgen.

Aus DE 37 18 490 A1 ist ein weiteres Magnetventil der oben beschriebenen Art bekannt. Bei diesem bekannten Magnetventil ist der Ventilkörper aus einem rohrförmigen Element aus nichtmagnetischem Material aufgebaut, dessen Enden jeweils durch Elemente aus einem magnetischen Material verschlossen sind. An ein erstes dieser Elemente sind eine Eingangs- und eine Ausgangsleitung, an das zweite eine Ausgangsleitung angefügt. Zwei Permanentmagnete sind mit einander zugewandten gleichnamigen Polen beiderseits des rohrförmigen Elementes angeordnet. Das zweite Element aus magnetischem Material ist über das Ende des rohrförmigen Elements verlängert und von der Magnetspule umgeben. Ein U-förmiges Blechteil umgibt die gesamte Anordnung und schließt einen Magnetkreis, der durch die zwei Elemente aus magnetischem Material und das Ventilglied verläuft und die Bewegung des Ventilglieds zwischen seinen zwei Endstellungen zu steuern erlaubt.

Die Montage dieses bekannten Magnetventils ist aufwendig und dementsprechend kostspielig. Zum Anschließen der zweiten Ausgangsleitung ist eine radiale Bohrung in dem zweiten Element aus magnetischem Material erforderlich. An dem Ventilkörper müssen die Permanentmagnete und die Magnetspule befestigt werden, und schließlich muß über die gesamte Anordnung einschließlich daran befestigter Ein- und Ausgangsleitungen das U-förmige Blechteil gestülpt und befestigt werden.

Durch die vorliegende Erfindung wird ein Magnetventil der oben genannten Art geschaffen, dessen Aufbau vereinfacht ist und das deshalb mit geringem Aufwand und preiswert gefertigt werden kann.

Indem in dem Gehäuse des erfindungsgemäßen Magnetventils der Ventilkörper und die Magnetspule jeweils in Fächern aufgenommen sind und der Permanentmagnet in einer Fassung an einer Wandung des Gehäuses gehalten ist, wird eine Umkehrung in der Reihenfolge des Zusammenbaus der Komponenten des Magnetventils möglich. Anstatt wie bisher die einzelnen Komponenten aufwendig nacheinander um das Magnetventil herum zu montieren, können gemäß der vorliegenden Erfindung die Komponenten bequem der Reihe nach an dem Gehäuse montiert werden, wobei eine vorgeformte Fassung für den Permanentmagneten bzw. Fächer für Ventilkörper und Magnetspule eine schnelle, bequeme und gut maßhaltige Montage dieser Komponenten relativ zueinander ermöglichen. Da die relative Lage der Komponenten zueinander durch die Fächer bzw. die Fassung vorgegeben ist, ergibt sich die für das zuverlässige Funktionieren des Magnetventils erforderliche exakte Positionierung der einzelnen Komponenten relativ zueinander von selbst.

Vorteilhafte Ausgestaltungen sind Gegenstand von abhängigen Ansprüchen.

Vorzugsweise ist die Fassung des Permanentmagneten als eine zum Gehäuseinneren offene Aussparung des Gehäuses ausgebildet. Dies erlaubt es, den Permanentmagneten in direktem Kontakt mit dem im Gehäuse gehaltenen Ventilkörper anzuordnen.

Weiterhin ist bevorzugt, daß der Permanentmagnet in der Aussparung durch Rasthaken gehalten ist. Dies erlaubt eine Montage des Magneten durch einfaches Einrasten.

Das Gehäuse umfaßt zweckmäßigerweise zwei Teile oder Schalen, die an einer durch Längsachsen der Spule und des Ventilkörpers definierten Ebene aneinander grenzen.

Diese zwei Teile können nach Anbringung von Magnetspule und Ventilkörper in ihren jeweiligen Fächern bequem miteinander verrastet werden.

Eine Permanentmagnet kann an jedem der zwei Teile angeordnet sein, so daß sich die zwei Permanentmagnete beiderseits der Grenzebene der zwei Teile gegenüber liegen.

Um elektrische Versorgungsleitungen bequem an die Magnetspule anschließen zu können, ist das Gehäuse zweckmäßigerweise mit einem Deckel versehen, der den Zugang zu Versorgungsanschlüssen der Magnetspule erlaubt.

Dieser Deckel ist zweckmäßigerweise mit dem übrigen Gehäuse durch ein Folienschamier verbunden. Ein solcher Deckel kann auf bequeme Weise einteilig mit einem angrenzenden Bereich des Gehäuses, z.B. durch Spritzguß, hergestellt werden.

Zweckmäßigerweise bilden der Deckel und ein angrenzender Rand des übrigen Gehäuses eine Halterung für eine Zugentlastung eines Versorgungskabels der Magnetspule.

Der Ventilkörper ist vorzugsweise zylindrisch mit dem Eingang in der axialen Mitte des Ventilkörpers und den zwei Ausgängen an entgegengesetzten Stirnseiten ausgebildet. Eine solche Gestalt des Ventilkörper ermöglicht eine bequeme Herstellung, etwa durch Einschieben von zwei jeweils einen Ventilsitz und einen Ausgang bildenden Elementen von den Enden her in ein zylindrisches Rohr.

Ein mit dem Eingang verbundenes Eingangsrohr ist durch einen an den zwei Teilen des Gehäuses geformten Stutzen geführt. Auf diese Weise ist der Ventilkörper in seinem Fach sowohl gegen eine Drehung um seine Achse als auch gegen eine Verschiebung in Richtung der Achse gesichert.

Für eine flexible Montage des Magnetventils in unterschiedlichen Anwendungsumgebungen sind an der Außenfläche des Gehäuses vorzugsweise mehrere Befestigungslaschen in unterschiedlichen Orientierungen ausgebildet.

Die Enden des Ventilkörpers liegen vorzugsweise an der Außenfläche des Gehäuses frei. Dies erlaubt die Verwendung des Gehäuses sowohl für solche Ventilkörper, die bereits mit Ausgangsleitungen bestückt in dem Gehäuse montiert werden als auch für solche, bei denen die Ausgangsleitungen erst nach der Anbringung des Ventilkörpers in dem Gehäuse und möglicherweise auch erst nach Montage des Gehäuses in seiner Anwendungsumgebung an den Enden des Ventilkörpers befestigt, insbesondere angelötet werden. Insbesondere für den letzteren Fall ist es zweckmäßig, daß das Gehäuse aus einem hitzebeständigem Material, insbesondere aus einem Kunststoff wie etwa Polypropylen, gefertigt ist, der durch die beim Anlöten der Anschlußleitungen an der Oberfläche des Ventilkörpers auftretenden Temperaturen aushält, ohne Schaden zu nehmen.

Weitere Merkmale und Vorteile der Erfindung ergeben sich aus der nachfolgenden Beschreibung von Ausführungsbeispielen mit Bezug-auf die beigefügte Zeichnung. Es zeigen:
- Figur 1 eine perspektivische Ansicht eines Gehäuseunterteils des erfindungsgemäßen Magnetventils;
- Figur 2 eine Draufsicht auf das Gehäuseunterteil aus Figur 1 mit darin angebrachtem Ventilkörper und Magnetspule;
- Figur 3 eine perspektivische Ansicht der zwei miteinander verbundenen Gehäuseteile.

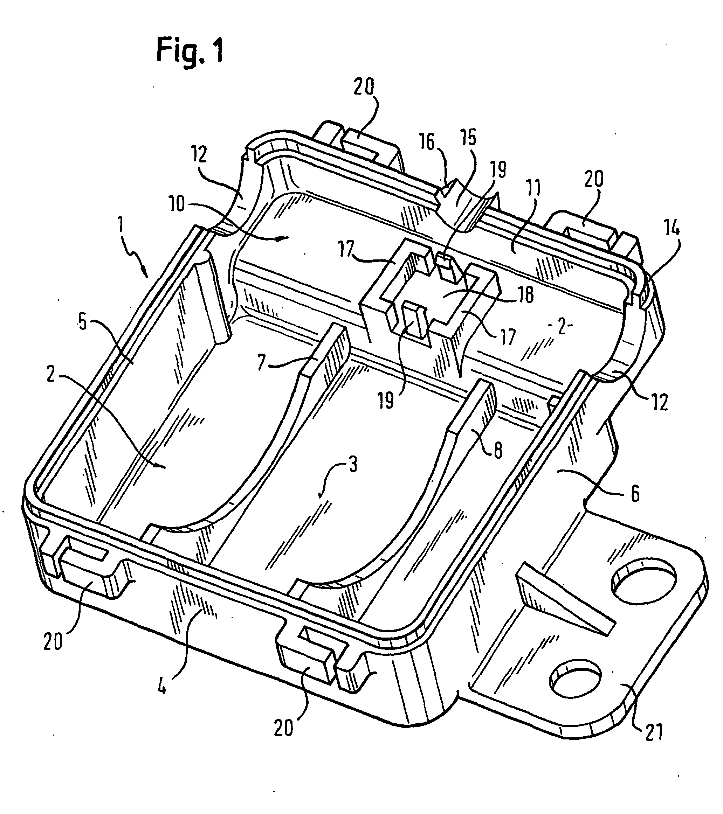

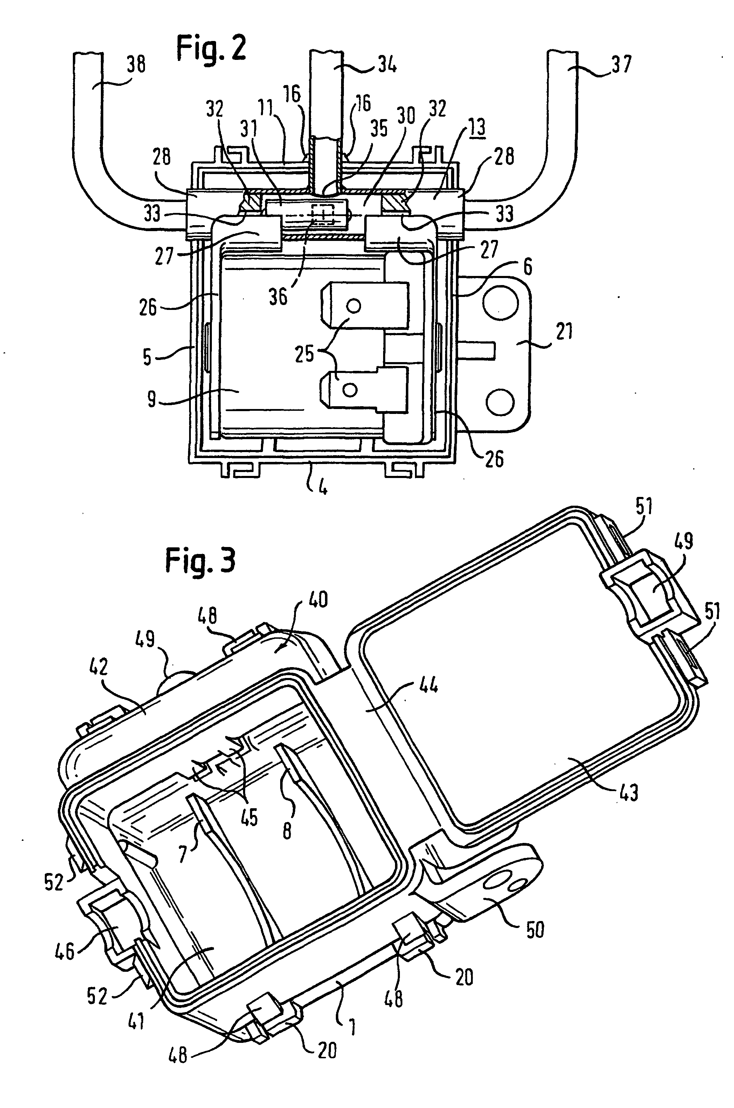

Figur 1 zeigt eine perspektivische Ansicht eines ersten Gehäuseteils, hier als Gehäuseunterteil 1 bezeichnet, des erfindungsgemäßen Magnetventils. Das Gehäuse ist aus Polypropylen im Spritzguß gefertigt. Es besitzt ein erstes Fach 2, das durch einen Boden 3 und Seitenwände 4, 5, 6 begrenzt ist. Zwei Rippen 7, 8 erstrecken sich ausgehend von der Seitenwand 4 über den Boden 3. Sie weisen jeweils einen kreisbogenförmigen Ausschnitt auf, dessen Durchmesser an die Gestalt einer im wesentlichen zylinderförmigen Magnetspule 9 (siehe Figur 2) angepaßt ist, die in dem ersten Fach 2 untergebracht werden soll, und der so angeordnet ist, daß die Längsachse der Magnetspule 9 in einer durch die gemeinsame Oberkante 14 der Seitenwände definierten Ebene liegt.

An den von der Seitenwand 4 abgewandten Enden der Rippen 7, 8 grenzt an das erste Fach 2 ein zweites Fach 10 an, das durch die Seitenwände 5, 6 und eine vierte Seitenwand 11 begrenzt ist. Zwei halbkreisförmige Ausschnitte 12 in den Seitenwänden 5, 6 sind zum Aufnehmen eines zylindrischen Ventilkörpers 13 (siehe Figur 2) vorgesehen. Der Durchmesser der Ausschnitte 12 entspricht dem des Ventilkörpers 13, so daß dessen Längsachse ebenfalls in der Ebene der gemeinsamen Oberkante 14 zu liegen kommt.

Ein weiterer halbkreisförmiger Ausschnitt 15 ist in der Mitte der vierten Seitenwand 11 angeordnet und nach außen durch einen halbkreisförmigen Vorsprung 16 verlängert.

Zwei am Boden des zweiten Fachs 10 vorspringend geformte C-förmige Wände 17 begrenzen eine Aussparung 18, die zum Aufnehmen eines Permanentmagneten 36 (siehe Figur 2) vorgesehen ist. Zur Verankerung des quaderförmigen Permanentmagneten 36 in der Aussparung 18 dienen zwei vom Boden des zweiten Fachs 10 zwischen den Wänden 17 vorspringende Rasthaken 19. Die Rasthaken 19 sind quer zur Längsrichtung des Ventilkörpers beabstandet, und ihre Höhe ist auf den Durchmesser der Ausschnitte 12 derart abgestimmt, daß sie in der Aussparung 18 einen quaderförmigen Permanentmagneten in einer Stellung halten können, in der er die Außenwand des Ventilkörpers 13 berührt, ohne daß die Rasthaken 19 selber mit ihrem über die Oberfläche des Magneten überstehenden Bereich an den Ventilkörper 13 anstoßen.

Zwei Paare von Rastlaschen 20 sind in Höhe der Oberkante 14 an die Seitenwände des Gehäuseunterteils, hier die Wände 4 und 11, angeformt. Desweiteren ist eine Befestigungslasche 21 mit zwei Bohrungen zum Verschrauben oder Annieten des Gehäuseunterteils 1 an eine Unterlage an die Seitenwand 6 angeformt.

Die Montage des Magnetventils erfolgt, indem zunächst ein Permanentmagnet in die Aussparung 18 eingerastet und dann Magnetspule 9 und Ventilkörper 13 in ihre Fächer 2 bzw. 10 eingelegt werden. Dieser Zustand ist in Figur 2 in einer Draufsicht gezeigt.

Die Magnetspule 9 besitzt einen zylindrischen Spulenkörper, an dessen in der Figur rechtem Ende zwei abgewinkelte Kontaktschuhe 25 für die Stromversorgung der Spule angeordnet sind. An den Stirnseiten des Eisenkems der Spule 9 sind zwei streifenförmige Eisen 26 angenietet, die am äußeren Umfang der Magnetspule 9 umgebogen und zu Polschuhen 27 mit einem halbkreisförmigen Querschnitt geformt sind.

Die Polschuhe 27 umgreifen formschlüssig die Außenseite des zylindrischen Ventilkörpers 13. Dieser liegt an seinen Enden 28 in den Ausschnitten 12 des Gehäuseunterteils 1.

Der Ventilkörper 13 ist in Figur 2 teilweise aufgeschnitten gezeigt, um seine Arbeitsweise zu veranschaulichen. Eine Kammer 30 im Innern des Ventilkörpers 13 ist an zwei Enden durch Ventilsitze 32 begrenzt, die jeweils eine mittige Bohrung aufweisen, die einen Ausgang 33 des Ventils darstellt. Eine Eingangsleitung 34 ist an einem mittig in die Kammer 30 mündenden Eingang 35 des Ventils angelötet. Ein Ventilglied 31 in Form eines zylindrischen Körpers aus ferromagnetischem Material mit einer an jeder Stirnseite des zylindrischen Körpers verpreßten Kugel ist zwischen zwei Endpositionen bewegbar, in denen jeweils eine der Kugeln an einem der Ventilsitze 32 anliegt und den entsprechenden Ausgang 33 verschließt. Der in der Aussparung 18 aufgenommene Permanentmagnet 36 ist durch einen gestrichelten Umriß in der Figur angedeutet. Der Magnet 36 liegt genau auf halbem Wege zwischen den zwei Ventilsitzen 32. Bei der in der Figur gezeigten Stellung des Ventilgliedes 31 bildet dieses einen Magnetkreis, der ausgehend von dem Magneten 36 durch das Ventilglied 31, den linken Ventilsitz 32, den linken Polschuh 27 und zurück zum Magneten 36 verläuft. Durch diesen Magnetkreis wird das Ventilglied 31 in der gezeigten Position stabil gehalten, und ein Kühlfluid kann von der Eingangsleitung 34 durch den Ventilkörper zur rechten Ausgangsleitung 37 fließen, während der Weg zur linken Ausgangsleitung 38 verschlossen ist.

Das Ventil 31 ist nicht dauerhaft magnetisiert, es weist aber durch den Magnetkreis eine Influenzmagnetisierung auf. Wenn an die Kontaktschuhe 25 ein Stromstoß geeigneter Polarität angelegt wird, der zwischen den zwei Polschuhen 27 ein zum Influenzmagnetfluß in dem Ventilglied 31 entgegengesetztes Magnetfeld erzeugt, so wird das Ventilglied 31 aus der in Figur 2 gezeigten Endposition in die gegenüberliegende Endposition verlagert, in der es den Durchgang von der Eingangsleitung 34 zur Ausgangsleitung 37 sperrt und zur Ausgangsleitung 38 freigibt. In dieser Endposition bildet sich ein zu dem oben beschriebenen analoger Magnetkreis zwischen dem Permanentmagneten 36 und dem linken Ventilsitz 32 aus, der das Ventilglied 31 in der Endposition hält.

Durch einen Stromstoß entgegengesetzter Polarität wird der Ventilkörper zurück in die in der Figur gezeigte Endposition verlagert.

Das Magnetventil wird vervollständigt durch ein Gehäuseoberteil 40, das in Figur 3 in einer perspektivischen Ansicht auf dem Unterteil 1, allerdings ohne Magnetspule und Ventilkörper gezeigt ist. Wie das Unterteil 1 weist auch das Oberteil 40 ein erstes Fach 41 für die Spule und ein zweites Fach 42 für den Ventilkörper auf. Das erste Fach 41 ist höher als das entsprechende Fach 2 des Unterteils, um die abgewinkelten Kontaktschuhe 25 darin unterzubringen, und es weist anstelle eines Bodens mit Rippen daran einen rippenlosen Deckel 43 auf, der mit dem Rest des Oberteils 40 einstöckig durch Spritzguß erzeugt und mit diesem durch ein Folienscharnier 44 verbunden ist.

Auch in dem Fach 42 des Oberteils 40 ist eine Aussparung zur Aufnahme eines zweiten Permanentmagneten vorgesehen, die zur Aussparung 18 spiegelbildlich ist und von der ein Teil der C-förmigen Wände 45 in der Figur zu erkennen ist. Diese Aussparung liegt der Aussparung 18 exakt gegenüber, und der Permanentmagnet in ihr ist entgegengesetzt zu dem Permanentmagneten 36 in der Aussparung 18 gepolt, so daß die Felder der zwei Permanentmagneten sich zu einem im Bereich der Ventilsitze 32 genau in axialer Richtung des Ventilkörpers orientierten Feld überlagern.

Bei einer vereinfachten Ausgestaltung des Magnetventils kann eine der zwei Aussparungen entfallen, und es wird lediglich ein Permanentmagnet zum Halten des Ventilgliedes 31 in einer seiner zwei Endpositionen eingesetzt. Diese Variante hat neben der Kostenreduzierung durch Einsparung eines Magneten den Vorteil, daß beim Einsetzen des Magneten in die Aussparung nicht mehr auf korrekte Polung geachtet werden muß, wohingegen bei Verwendung von zwei Permanentmagneten sichergestellt sein muß, daß sich jeweils gleichnamige Pole auf beiden Seiten des Ventilkörpers gegenüberliegen.

An die jeweils dem Folienscharnier 44 gegenüberliegende Kante des Deckels 43 und des Gehäuseoberteils 40 sind zwei Halbschalen 46, 47 angeformt, die bei geschlossenem Deckel eine Kammer mit einem Durchgang für ein Stromversorgungskabel für die Magnetspule begrenzen. Die so gebildete Kammer kann zur Verankerung einer an das Versorgungskabel angeformten Zugentlastung bzw. eines Knickschutzes für das Versorgungskabel dienen. Beiderseits der Halbschalen angeformte Rastösen 51 und - nasen 52 bewirken eine Verriegelung des Deckels 43 in geschlossener Stellung.

An die Außenwände des Gehäuseoberteils 40 sind ferner zu den Rastlaschen 20 des Unterteils 1 komplementäre Rastnasen 48 sowie ein halbkreisförmiger Vorsprung 49 angeformt, der sich mit dem entsprechenden Vorsprung 16 des Gehäuseunterteils zu einem Stutzen ergänzt, in dem die Eingangsleitung 34 des Ventils fest gehalten ist. Ferner ist eine zweite-Befestigungslasche 50 in einer zur Befestigungslasche 21 des Gehäuseunterteils 1 orthogonalen Orientierung angeformt.

Zum Montieren des erfindungsgemäßen Magnetventils bedarf es nur weniger einfacher Schritte, bei denen nicht auf Maßhaltigkeit geachtet werden muß, weil die Positionen der einzelnen Komponenten relativ zueinander durch die Gestalt der zwei Gehäuseteile 1, 40 vorgegeben ist. In einem ersten Schritt wird wenigstens eines der Gehäuseteile mit einem Permanentmagneten bestückt. Dann werden der Ventilkörper 13 mit daran montierter Eingangsleitung 34 und die Magnetspule 9 in die hierfür vorgesehenen Fächer eines Gehäuseteils eingelegt. Durch Verrasten des Gehäuseoberteils 40 auf dem Unterteil 1 werden der Ventilkörper 13 und die Magnetspule 9 in ihren Positionen fixiert. Dabei kann der Ventilkörper 31 in diesem Stadium bereits mit den Ausgangsleitungen 37, 38 versehen sein; da die Enden 28 des Ventilkörpers 31 frei liegen, ist es jedoch auch möglich, die Ausgangsleitungen 37, 38 erst nachträglich zu befestigen, z.B. anzulöten.

Anschließend wird eine Zugentlastung des auf die Kontaktschuhe 25 aufgesteckten Versorgungskabels der Magnetspule in die Halbschale 46 eingelegt und der Deckel 43 wird zugeklappt.

Falls nur ein Permanentmagnet verwendet wird, ist es auch möglich, bei demjenigen Gehäuseteil, das keinen Magneten enthält, den zur Aufnahme der Eingangsleitung 34 vorgesehenen Ausschnitt 15 zu einem Schlitz zu erweitern, der eine Drehung des Ventilkörpers um seine Achse zuläßt. Diese Variante kann in bestimmten Einsatzumgebungen den Einbau des Ventils erleichtern.

## Patentansprüche

1. Magnetventil, insbesondere für eine Kältemaschine, mit einem Ventilkörper (13) mit einem Eingang (35) und zwei Ausgängen (33) und einem in dem Ventilkörper (13) zwischen zwei jeweils unterschiedlichen Schaltstellungen des Magnetventils entsprechenden Endpositionen bewegbaren Ventilglied (31), wenigstens einem Permanentmagneten (36) zum Halten des Ventilglieds (31) in der jeweils eingenommenen Endposition und einer Magnetspule (9) zum Ausüben einer eine Verlagerung in die jeweils andere Endposition bewirkenden Magnetkraft auf das Ventilglied (31 ),**dadurch gekennzeichnet, daß** der Ventilkörper (13) und die Magnetspule (9) in zwei vorgeformte Fächern eines Gehäuses (1, 40) aus nichtmagnetischem Material aufgenommen sind, und daß der wenigstens eine Permanentmagnet (36) in einer Fassung an einer Wandung des Gehäuses einer zwischen den zwei Endpositionen liegenden Mittelposition des Ventilglieds (31) zugewandt gehalten ist.

2. Magnetventil nach Anspruch 1, **dadurch gekennzeichnet, daß** die Fassung des Permanentmagneten (36) eine zum Gehäuseinneren offene Aussparung (18) des Gehäuses ist.

3. Magnetventil nach Anspruch 2, **dadurch gekennzeichnet, daß** der Permanentmagnet 36) in der Aussparung (18) durch Rasthaken (19) gehalten ist.

4. Magnetventil nach einem der vorhergehenden Ansprüche, **dadurch gekennzeichnet, daß** das Gehäuse zwei Teile (1, 40) umfaßt, die an einer durch Längsachsen der Spule (9) und des Ventilkörpers (13) definierten Ebene aneinandergrenzen.

5. Magnetventil nach Anspruch 4, **dadurch gekennzeichnet, daß** ein Permanentmagnet (36) an jedem der zwei Teile (1, 40) angeordnet ist.

6. Magnetventil nach einem der vorhergehenden Ansprüche, **dadurch gekennzeichnet, daß** das Gehäuse einen Deckel (43) aufweist, der den Zugang zu Versorgungsanschlüssen (25) der Magnetspule (9) erlaubt.

7. Magnetventil nach Anspruch 6, **dadurch gekennzeichnet, daß** der Deckel (43) durch ein Folienschamier (44) mit dem übrigen Gehäuse verbunden ist.

8. Magnetventil nach Anspruch 6 oder 7, **dadurch gekennzeichnet, daß** am Deckel (43) und dem angrenzenden Rand des übrigen Gehäuses eine Zugentlastung für ein Versorgungskabel der Magnetspule (9) vorgesehen ist.

9. Magnetventil nach einem der vorhergehenden Ansprüche, **dadurch gekennzeichnet, daß** der Ventilkörper (13) zylindrisch mit dem Eingang (35) in der axialen Mitte des Ventilkörpers (13) und den zwei Ausgängen (33) an entgegengesetzten Stirnseiten (28) ausgebildet ist.

10. Magnetventil nach Anspruch 9 und Anspruch 5 oder 6, **dadurch gekennzeichnet, daß** ein mit dem Eingang (35) verbundenes Eingangsrohr (34) durch einen an den zwei Teilen (1, 40) des Gehäuses geformten Stutzen (16, 49) geführt ist.

11. Magnetventil nach Anspruch 9 oder 10 und Anspruch 3, **dadurch gekennzeichnet, daß** die Rasthaken (19) quer zur Längsrichtung des zylindrischen Ventilkörpers (13) beabstandet sind.

12. Magnetventil nach einem der vorhergehenden Ansprüche, **dadurch gekennzeichnet, daß** an der Außenfläche des Gehäuses mehrere Befestigungslaschen (21, 50) in unterschiedlichen Orientierungen ausgebildet sind.

13. Magnetventil nach einem der vorhergehenden Ansprüche, **dadurch gekennzeichnet, daß** die Enden (28) des Ventilkörpers (13) zum Anschließen von Ausgangsleitungen (37, 38) an der Außenfläche des Gehäuses freiliegen.

14. Magnetventil nach einem der vorhergehenden Ansprüche, **dadurch gekennzeichnet, daß** das Gehäuse aus einem hitzebeständigen Kunststoffmaterial, insbesondere aus Polypropylen, gefertigt ist.

## Claims

1. Magnetic valve, particularly for a refrigerating machine, with a valve body (13) with an inlet (35) and two outlets (33) and a valve element (31) movable between two end positions respectively corresponding with different switch settings of the magnetic valve, at least one permanent magnet (36) for holding the valve element (31) in the respectively adopted end position and a magnet coil (9) for exerting on the valve element (31) a magnetic force causing a displacement into the respective other end position, **characterised in that** the valve body (13) and the magnet coil (9) are received in two preshaped compartments of a housing (1, 40) of non-magnetic material and that the at least one permanent magnet (36) is retained in a mount at a wall of the housing to face a centre position of the valve element (31) disposed between the two end positions.

2. Magnetic valve according to claim 1, **characterised in that** the mount of the permanent magnet (36) is a cut-out (18) open towards the housing interior.

3. Magnetic valve according to claim 2, **characterised in that** the permanent magnet (56) is retained in the cut-out (18) by detent hooks (19).

4. Magnetic valve according to one of the preceding claims, **characterised in that** the housing comprises two parts (1, 40), which adjoin a plane defined by longitudinal axes of the coil (9) and the valve body (13).

5. Magnetic valve according to claim 4, **characterised in that** a permanent magnet (36) is arranged at each of the two parts (1, 40).

6. Magnetic valve according to one of the preceding claims, **characterised in that** the housing has a cover (43) which allows access to supply terminals (25) of the magnet coil (9).

7. Magnetic valve according to claim 6, **characterised in that** the cover (43) is connected with the rest of the housing by a film hinge (44).

8. Magnetic valve according to claim 6 or 7, **characterised in that** tension relief means for a supply cable of the magnet coil (9) is provided at the cover (43) and the adjoining edge of the rest of the housing.

9. Magnetic valve according to one of the preceding claims, **characterised in that** the valve body (13) is formed to be cylindrical with the inlet (35) in the axial centre of the valve body (13) and the two outlets (33) at opposite end faces (28).

10. Magnetic valve according to claim 9 and claim 5 or 6, **characterised in that** an inlet pipe (34) connected with the inlet (35) is led through a stub pipe (16, 49) formed at the two parts (1, 40) of the housing.

11. Magnetic valve according to claim 9 or 10 and claim 3, **characterised in that** the detent hooks (19) are spaced transversely relative to the longitudinal direction of the cylindrical valve body (13).

12. Magnetic valve according to one of the preceding claims, **characterised in that** several fastening straps (21, 50) are formed in different orientations at the outer surface of the housing.

13. Magnetic valve according to one of the preceding claims, **characterised in that** the ends (28) of the valve body (13) lie freely at the outer surface of the housing for connection of outlet ducts (37, 38).

14. Magnetic valve according to one of the preceding claims, **characterised in that** the housing is made is of a heat-resistant synthetic material, for example of polypropylene.

## Revendications

1. Vanne magnétique, en particulier pour une machine frigorifique, qui présente un corps de vanne (13) doté d'une entrée (35) et de deux sorties (33) et dans le corps de vanne (13), un organe de vanne (31) qui peut être déplacé entre deux positions d'extrémité qui correspondent à différentes positions de branchement de la vanne magnétique, au moins un aimant permanent (36) qui maintient l'organe de vanne (31) dans la position d'extrémité qu'il a prise et une bobine magnétique (9) qui exerce une force magnétique sur l'organe de vanne (31) provoquant un déplacement dans l'autre position d'extrémité, **caractérisée en ce que** le corps de vanne (13) et la bobine magnétique (9) sont logés dans deux compartiments préformés d'un boîtier (1, 40) en matériau non magnétique et **en ce que** l'au moins un aimant permanent (36) est serti sur une paroi du boîtier qui est orientée vers une position centrale de l'organe de vanne (31) qui est située entre les deux positions d'extrémité.

2. Vanne magnétique selon la revendication 1, **caractérisée en ce que** l'aimant permanent (36) est serti dans une découpe (18) du boîtier ouverte vers l'intérieur du boîtier.

3. Vanne magnétique selon la revendication 2, **caractérisée en ce que** l'aimant permanent (36) est maintenu dans la découpe (18) par des crochets d'encliquetage (19).

4. Vanne magnétique selon l'une des revendications précédentes, **caractérisée en ce que** le boîtier comprend deux parties (1, 40) qui sont adjacentes dans un plan défini par les axes longitudinaux de la bobine (9) et du corps de vanne (13).

5. Vanne magnétique selon la revendication 4, **caractérisée en ce qu'**un aimant permanent (36) est disposé sur chacune des deux parties (1, 40).

6. Vanne magnétique selon l'une des revendications précédentes, **caractérisée en ce que** le boîtier présente un couvercle (43) qui donne accès aux raccordements d'alimentation (25) de la bobine magnétique (9).

7. Vanne magnétique selon la revendication 6, **caractérisée en ce que** le couvercle (43) est relié par un film de charnière (44) au reste du boîtier.

8. Vanne magnétique selon les revendications 6 ou 7, **caractérisée en ce qu'**un délestage de traction du câble d'alimentation de la bobine magnétique (9) est prévu sur le couvercle (43) et sur le bord adjacent du reste du boîtier.

9. Vanne magnétique selon l'une des revendications précédentes, **caractérisée en ce que** le corps de vanne (13) présente une configuration cylindrique, avec l'entrée (35) au centre axial du corps de vanne (13) et les deux sorties (33) sur les côtés frontaux (28) opposés.

10. Vanne magnétique selon la revendication 9 et les revendications 5 ou 6, **caractérisée en ce qu'**un tube d'entrée (34) relié à l'entrée (35) est guidé par une tubulure (16, 49) formée sur les deux parties (1, 40) du boîtier.

11. Vanne magnétique selon les revendications 9 ou 10 et la revendication 3, **caractérisée en ce que** les crochets d'encliquetage (19) sont à distance mutuelle dans un sens transversal par rapport au sens de la longueur du corps de vanne (13) cylindrique.

12. Vanne magnétique selon l'une des revendications précédentes, **caractérisée en ce que** plusieurs pattes de fixation (21, 25) sont formées dans des orientations différentes sur la surface extérieure du boîtier.

13. Vanne magnétique selon l'une des revendications précédentes, **caractérisée en ce que** les extrémités (28) du corps de vanne (13) sont situées librement à la surface du boîtier pour permettre le raccordement de conduits de sortie (37, 38).

14. Vanne magnétique selon l'une des revendications précédentes, **caractérisée en ce que** le boîtier est fabriqué en une matière synthétique qui résiste à la chaleur, en particulier en polypropylène.
